# EUROPEAN PATENT APPLICATION

(11) **EP 3 000 788 A1**
(43) Date of publication of application: **30.03.2016**
(21) Application number: 14186533.7
(22) Date of filing: 26.09.2014
(51) Int. Cl.: C02F 1/28, C02F 1/44, C02F 101/10

(54) **Method for removing phosphate from water fractions**

(71) Applicant: BiAqua B.V., 1171 PK Badhoevedorp (NL)
(72) Inventor: Besemer, Arie Cornelis, 1171 PK Badhoevedorp (NL); Broens, Lute, 1171 PK Badhoevedorp (NL); Paravidino, Monica, 1171 PK Badhoevedorp (NL); Calderone, Vincenzo Roberto, 1171 PK Badhoevedorp (NL); van Duin, Richard Johannes, 1171 PK Badhoevedorp (NL)
(74) Representative: De Vries & Metman

(57) **Abstract**

The invention pertains to a method for removing phosphate from a phosphate-containing water fraction comprising the steps of contacting a phosphate-containing water fraction with an adsorbent, the adsorbent comprising a complex of Fe(III) and pulped plant material, the pulped plant material having a carboxylate content of at least 200 microequivalent carboxylate per gram, and withdrawing an effluent water fraction from the adsorbent.

The pulped plant material preferably is a pectin-containing plant material that is obtained as waste product after withdrawal of food or feed components from fruits and vegetables, more in particular a pulped plant material derived from fruit, e.g., citrus pulp and apple pulp, or a pulped plant material derived from vegetables, e.g., beet pulp, potato pulp, chicory pulp, tomato pulp, and carrot pulp, with beet root pulp being particularly preferred.

An adsorbent suitable for use in this process, and a method for manufacturing an adsorbent are also claimed.

## Description

The present invention pertains to a method for removing phosphate from water fractions. The invention also pertains to an adsorbent suitable for use therein, and to a method for manufacturing said adsorbent.

Phosphate is present in many water fractions, including waste water and water derived from water cleaning operations. As phosphate is an important nutrient for microorganisms, its presence may contribute to the growth of microorganisms. Therefore, phosphate removal is required to prevent bacterial growth.
A particular problem with bacterial growth is that even minor growth of microorganisms, a process which is sometimes also indicated as biofouling, may interfere with further processing of the water streams. For example, water streams are often subjected to treatment in membrane operations, e.g., membrane filtration or reverse osmosis. The occurrence of even minor amounts of biofouling in apparatus provided with a membrane will severely affect operation thereof. Therefore, there is need in the art for methods for removing phosphate from aqueous water streams to prevent or reduce the occurrence of biofouling, in particular in subsequent membrane operations.

Various methods to effect phosphate removal are known in the art.
WO90/05705 describes a method for the removal of phosphate from water wherein water is treated with an iron(II) compound, e.g., in the form of iron(II) sulphate or iron(II) chloride in the presence of solid particles, which results in the precipitation of iron phosphate onto the particles. The iron phosphate containing particles can then be removed through filtration.
EP1764348 describes the use of thermophilic ferritin in the removal of phosphate from water fractions.
US2008/0076956 describes a method for removal of anions such as phosphate from water fractions using a lignocellulose-based anion adsorbing material, which is obtained by the steps of pelletising a lignocellulose, and contacting it with an acidic solution of an iron or aluminium salt, followed by an alkaline treatment to fixate the compounds onto the lignocellulose. The inventors have also published an article on this subject (Kim et al., Journal of Environmental Science and Health Part A, 41:87-100, 2006).
Eberhardt et al. (Bioresource Technology 97 (2006) 2371-2376) describe the removal of phosphate from stormwater runoffs by contacting it with refined aspen wood treated with carboxymethyl cellulose and ferrous chloride.

There are various problems with the methods described in the art. In the first place, there is need in the art for a phosphate adsorbent having a high phosphate adsorption capacity per kilogram material. There is further need in the art for a phosphate adsorbent having a relatively stable particulate structure, which allows it to be used in adsorption columns, etc. There is further need in the art for a phosphate adsorbent which is based on a low-cost bio-based material, and additionally there is need in the art for a method, and for an adsorbent suitable for use therein, for removing phosphate from water fractions which allows phosphate removal to a very low level. The present invention provides such a method and adsorbent.

The invention pertains to a method for removing phosphate from a phosphate-containing water fraction comprising the steps of contacting a phosphate-containing water fraction with an adsorbent, the adsorbent comprising a complex of Fe(III) and a carrier material comprising a pulped plant material, the pulped plant material having a carboxylate content of at least 200 microequivalent (µeq) carboxylate per gram, and withdrawing an effluent water fraction from the adsorbent.

The invention also pertains to a phosphate adsorbent comprising a complex of Fe(III) and a carrier material comprising a pulped plant material, the pulped plant material having a carboxylate content of at least 200 microequivalent (µeq) carboxylate per gram.

It has been found that the use of the specific adsorbent according to the invention has a number of advantages. In the first place, it was found that it makes it possible to obtain effluent water fractions with very low phosphate contents, as will be discussed in more detail below. Further, it has been found that the adsorbent has a high adsorption capacity, expressed in mg of phosphate per gram of adsorbent. This is important as it determines the size of the adsorption unit. Further, it has been found that the adsorbent used in the present invention can be regenerated in an efficient manner to allow re-use. Further, the adsorbent is based on a biobased, degradable material which is attractive from an environmental point of view. Further, the adsorbent of the present invention has been found to have sufficient strength so that it can withstand the pressure it encounters when used in a column. Further advantages of the present invention will become clear from the further specification.

The invention will be discussed in more detail below.

The water fraction to be treated with the process according to the invention is a phosphate-containing water fraction. In general, the water fraction has a phosphate content of at least 10 ppb, in particular at least 20 ppb, more in particular at least 50 ppb, still more in particular at least 100 ppb. The maximum for phosphate content is not critical. A suitable maximum value may be at most 50000 ppb (50 ppm). In one embodiment, the phosphate content may be at most 2000 ppb, specifically at most 1000 ppb, more specifically below 500 ppb.
Within the context of the present specification, the term phosphate encompasses organic and inorganic phosphates, including orthophosphate and polyphosphate. The phosphate content can be determined using the phosphate-molybdenum method, which is well known in the art.

Other parameters of the water fraction to be treated with the process according to the invention are generally not critical. The water fraction to be treated will generally have a pH around 7, e.g. in the range of 6 to 8.
The water fraction to be treated may have a variable salt content. Its conductivity is generally in the range of 20-100 mS/m, in particular in the range of 40-70 mS/m.
The water fraction to be treated may, e.g., have a nitrate content in the range of 0.1 to 50 mg N/l, in particular 1-20 mg N/l.

The water fraction to be treated may originate from various sources. In one embodiment it is derived from a waste water treatment plant. The water fraction can be subjected to conventional pretreatment steps to remove contaminants. Examples of suitable pretreatment steps include filtration and ultrafiltration.

The adsorbent of the present invention comprises a complex of Fe(III) comprising a complex of Fe(III) and a carrier material comprising a pulped plant material, the pulped plant material having a carboxylate content of at least 200 microequivalent (µeq) carboxylate per gram.

The adsorbent used in the present invention is based on a pulped plant material. Within the context of the present invention a pulped plant material is a pectin-containing plant material that is obtained as waste product after withdrawal of food or feed components from fruits and vegetables. Examples of suitable pulped plant materials are pulps derived from fruit, e.g., citrus pulp and apple pulp, and pulp derived from vegetables, e.g., beet pulp, potato pulp, chicory pulp, tomato pulp, and carrot pulp. The use of beet pulp is considered particularly preferred, as it has been found to combine the properties of a high adsorption capacity with high internal strength, allowing it to withstand the pressure encountered when used in an adsorption column.
Not wishing to be bound by theory it is believed that the suitability of beet pulp for use in the present invention is related to its composition. Beet pulp, and other plant pulps, in particular citrus pulp, have been found to contain substantial amounts of pectin, in addition to cellulose and hemicellulose. It is believed that the presence of substantial amounts of pectin contributes to the high adsorption capacity of the pulped plant material, in particular beet pulp and citrus pulp. In one embodiment the pulped plant material has a pectin content of at least 2 wt.%, in particular at least 5 wt.%, calculated on the dry weight of the pulp. As a maximum, a value of 30 wt.% may be mentioned. If so desired, it is possible to add pectin to the pulped plant material.

The pulped plant material used in the present invention has a carboxylate content of at least 200 microequivalent carboxylate per gram. It is preferred for the carboxylate content to be higher, e.g. at least 300 µeq/g, in particular at least 400 µeq/g, as a higher carboxylate content makes for increased phosphate adsorption. As a maximum for the carboxylate content, a value of at most 2000 µeq/g may be mentioned, more specifically at most 1000 µeq/g.
The carboxylate content may be determined by methods known in the art, e.g., by conductometric titration or FTIR (Fourier Transform Infrared spectroscopy).
The ranges given above for the carboxylate content of the pulped plant material also apply to the adsorbent itself.

Pulped plant materials having a carboxylate content of at least 200 microequivalent carboxylate per gram are commercially available. Commercially available pulped plant materials derived from vegetables and fruit generally meet this requirement.
While generally not required, it is possible in principle to increase the carboxylate content of the pulped plant material by subjecting it to an oxidation step. The oxidation step can be carried out in manners known in the art, e.g., by contacting a pulped plant material with an oxidising agent. Methods for manufacturing oxidised pulped plant material are known to the skilled person and require no further elucidation here.

The complex of Fe(III) and pulped plant material generally has an Fe(III) content of at least 1 wt.%, expressed as metallic iron, per gram of pulped plant material. If the Fe(III) content is too low, the adsorption capacity of the adsorbent will be insufficient. It may be preferred for the Fe(III) content to be at least 5 wt.%, expressed as metallic iron per gram of pulped plant material, more in particular at least 10 wt.% expressed as metallic iron per gram of pulped plant material.
In general, the Fe(III) content will be at most 90 wt.%, expressed as metallic iron, per gram of pulped plant material. When more iron is present, the accessibility of the additional iron will be limited, and it will therefore only have a limited contribution to the phosphate removal. More specifically, the Fe(III) content may be at most 60 wt.%, more in particular at most 50 wt.%, expressed as iron per gram of pulped plant material.

The average particle size of the pulped plant material used in the process according to the invention can vary within wide ranges. In one embodiment, the average particle size is within the range of 0.1 mm to 10 mm. Smaller particles may be preferred, because they have a relatively larger surface area per volume of particles. On the other hand, if the particles are very small, their use in an adsorption column may result in a high pressure over the unit. Therefore, in one embodiment, the average particle size is at most 8 mm, even more in particular at most 5 mm, in some embodiments at most 2 mm, specifically at most 1 mm. On the other hand, in particular where the adsorbent is to be used in an adsorption column, it may be preferred for the adsorbent to have an average particle size of at least 0.2 mm, in particular at least 0.3 mm. In one embodiment the average particle size is in the range of 0.1-2 mm, in particular 0.1-1 mm, more specifically in the range of 0.3-1 mm.
For the adsorbent, the ranges for the average particle size given above also apply. The average particle size is defined as the particle size of an equivalent sphere with the same volume.

In one embodiment, the complex of Fe(III) and pulped plant material is obtained as follows: pulped plant material is contacted with an aqueous solution of an Fe(III) salt, e.g., a sulphate, nitrate, or chloride salt, resulting in adsorption of Fe(III) onto the pulped plant material. It may be preferred for this adsorption step to be carried out at acidic pH. When the adsorption step has been completed, the pulped plant material onto which iron(III) has been adsorbed can be removed from the aqueous solution, and dried if so desired. If so desired, a neutralising step can be carried out after the Fe(III) adsorption step, whether or not with an intermediate drying step.
In one embodiment, the invention pertains to a method for preparing an adsorbent according to the invention, comprising the steps of
- contacting pulped plant material with an aqueous solution of an Fe(III) salt in a concentration of at least 1 mole/liter;
- optionally removing superfluous salt solution from the pulped plant material provided with Fe(III) salt;
- subjecting the pulped plant material provided with Fe(III) salt to a drying step;
- contacting the dried pulped plant material provided with Fe(III) with a neutralising solution, and
- optionally subjecting the neutralised pulped plant material provided with Fe(III) salt to a further drying step.
It has been found that the method specified above results in a product with a high phosphate adsorption capacity.

Within the process described above, a number of preferred embodiments may be recognised, which, as will be evident to the skilled person, can be combined at will.
The Fe(III) salt may, e.g., be selected from ferric cloride, ferric sulphate, ferric nitrate, and, although less preferred, ferric perchlorate. The use of ferric chloride or ferric sulphate is considered preferred at this point in time. Ferric chloride may be particularly preferred because it has been shows to give an adsorbent with good properties, and combines high solubility with good availability and cost-effectiveness. It is preferred for the amount of solution and the concentration of the solution to be selected such that the entire volume of solution will be adsorbed by the pulped plant material, so that removal of superfluous salt solution is not required. It has been found that one of the advantages of the pulped plant material, in particular beet pulp, is that its adsorption capacity is such that it can adsorb substantial amounts of liquid. It is within the scope of the skilled person to determine the amount of liquid that can be adsorbed by the pulped plant material. In one embodiment, the temperature of the impregnation solution is increased to a value above room temperature, to increase the solubility of the ferric salt and/or to increase the impregnation efficiency. A value of 25-80°C may be mentioned.
The aqueous solution of an Fe(III) salt has in a concentration of at least 1 mole/liter, preferably at least 2 mole/liter. The maximum amount of Fe(III) salt is determined by the solubility of the salt in the solution. Higher salt concentrations are advantageous because they allow higher metal loading of the pulped material.
The drying step of the pulped plant material provided with Fe(III) salt is preferably carried out in the temperature range of 20-80°C, in particular 30-60°C. The drying time is not critical, and will generally reside between 1 and 72 hours, depending, among others, on the temperature applied, on the type of equipment (vented or vacuum oven), and on the possible presence of desiccant materials. It has been found that the application of a drying step improves the bonding of the iron(III) to the pulp material. It is preferred for the drying step to be carried out to a water content of the impregnated pulp material of less than 15 wt.%, in particular less than 10 wt.%, in some embodiments less than 5 wt.%. After the drying step, the dried pulped plant material provided with Fe(III) is contacted with a neutralising solution. The neutralising solution generally is an aqueous solution of an inorganic base, examples of suitable bases are NaOH, KOH, and NH4OH. The use of NH4OH may be considered preferred, because of its good availability.
The amount and concentration of solution applied is generally selected such that the pH of the solution after the neutralisation step is at most 9, in particular at most 8, e.g., in the range of 6-8.
After the neutralisation step, it is preferred to apply a further drying step, as this has been found to yield a product with an increased adsorption capacity. The drying step of the neutralised pulped plant material provided with Fe(III) salt is preferably carried out in the temperature range of 20-80°C, in particular 30-60°C. The drying time is not critical, and will generally reside between 1 and 72 hours, depending on the temperature applied. It has been found that the application of a drying step improves the bonding of the iron(III) to the pulp material. It is preferred for the drying step to be carried out to a water content of the impregnated pulp material of less than 15 wt.%, in particular less than 10 wt.%, in some embodiments less than 5 wt.%.

If so desired, it is possible to subject the adsorbent thus obtained to a further washing step to remove superfluous iron and/or fines. After such washing step, which will generally be carried out with water in manners known in the art, a further drying step may optionally be applied. Such further drying step can be carried out in the manner discussed above.

It is noted that in the context of the present specification the term "complex of Fe(III) and pulped plant material" does not place a limitation on the chemical relationship between the iron(III) and the pulped plant material, as long as the iron is bonded with the pulped plant material.

The adsorbent used in the present invention may comprise additional components to the complex of Fe(III) and pulped plant material. Examples of additional components are bonding agents. Suitable bonding agents may, e.g., be cellulose type materials. While it is possible to use a material which contains additional bonding agents, it is one of the attractive features of the present invention that pulped plant material can be provided in a particle size which makes it suitable for use in the present invention. Therewith, the use of a bonding agent is generally not required.

The adsorbent used in the present invention preferably has a phosphate adsorption capacity of at least 15 mg/g. Higher values, e.g., at least 30 mg/g, in particular at least 40 mg/g, more in particular at least 50 mg/g are considered preferred. As a general attainable maximum a value of 300 mg/g may be mentioned.

In the process according to the invention, the phosphate containing water fraction is contacted with the adsorbent. This can be done by methods known in the art, including providing the adsorbent in a fixed bed, fluidised bed or moving bed, in a column, in a stirred reactor, or in any other way. The use of a column is preferred.
Contacting conditions are not critical, and encompass a contacting temperature of 0-100°C, in particular 1-50°C, more in particular 1-30°C. The pressure may vary between wide ranges, e.g. from 0.1 to 10 bar. Atmospheric pressure is generally suitable. Where a column is used, a velocity of 0.1-100 m/hour is generally suitable.

An effluent water fraction is withdrawn from the adsorbent. The phosphate content of the effluent water fraction is lower than the phosphate content of the starting phosphate-containing water fraction.
In one embodiment, the phosphate content of the effluent water fraction is less than 50% of the phosphate content of the starting phosphate-containing water fraction, in particular less than 25%, more in particular less than 10%.
In one embodiment, the phosphate content of the effluent water fraction is reduced to a value of less than 100 ppb, in particular less than 50 ppb, more in particular less than 20 ppb, or even less than 10 ppb. A process wherein the phosphate content of the effluent water fraction is below 10 ppb is of particular interest, especially, but not limited to, the situation where the effluent water fraction is to be provided to a reverse osmosis process.
The phosphate content of the effluent water fraction is determined by the phosphate content of the starting water fraction, the carboxylate and iron content of the adsorbent, the space velocity, and the amount of adsorbent. It is within the scope of the skilled person to select these parameters so that an effluent with the desired phosphate content is obtained.

The effluent water fraction can be processed as desired. In one embodiment, the effluent water fraction is provided to a reverse osmosis step, where the effluent water fraction is treated to form a purified effluent water fraction and a contaminant fraction. The reverse osmosis step effects contaminant removal, in particular salt removal.

When the adsorbent has become saturated with phosphate, as can be seen from an increase in phosphate content of the effluent water fraction, the adsorbent can be regenerated if so desired.

Therefore, the present invention also pertains to a method as described above wherein the adsorbent is periodically regenerated by a process comprising the steps of
- stopping the provision of phosphate-containing water fraction to the adsorbent
- contacting the adsorbent with an alkaline aqueous regeneration solution,
- withdrawing the alkaline aqueous regeneration solution from the adsorbent, and
- resuming the provision of phosphate-containing water fraction to the regenerated adsorbent.

The adsorbent can be regenerated by contacting it with an alkaline aqueous regeneration solution, more specifically an aqueous solution with a pH above 11.5. The pH preferably is above 12. In general, the pH will not be above 14.
The nature of the alkaline compound in the aqueous alkaline solution is not critical. Alkali metal hydroxides are generally preferred for reasons of availability, cost, and safety. The use of sodium hydroxide and/or potassium hydroxide is considered preferred.
It may be preferred to use a solution comprising both an alkali metal hydroxide and a dissolved inorganic salt, in particular an alkali metal salt, e.g., NaCl or KC1, or an alkaline earth metal salt, e.g., CaC12 or MgC12. The presence of a salt has been found to improve regeneration efficiency. Further, the material in some embodiments has a tendency to swell, and the presence of a salt in the regeneration solution may help to suppress this tendency. This is in particular the case for alkaline earth metal salts, e.g., CaC12 or MgC12. A salt concentration of 0.05 to 5 M/l may be mentioned as suitable. At high pH Ca and Mg will also be present in the form of oxides or hydroxides. However, by selecting a suitable amount of salt and an appropriate pH it can be ensured that sufficient Ca and Mg will still be present in solution to reduce or prevent swelling of the pulped material.

Contacting the adsorbent with the aqueous alkaline regeneration solution can be carried out using methods known in the art. Regeneration will be complete when the phosphate content of the regeneration solution does not further increase.

If so desired, it is possible to neutralise the adsorbent between the regeneration step and the restart of the phosphate removal step. In this case, the adsorbent is contacted with a neutralizing solution between the step of withdrawing the alkaline aqueous regeneration solution from the adsorbent, and the step of resuming the provision of phosphate-containing water fraction to the regenerated adsorbent, the adsorbent is contacted with a neutralizing solution.
A suitable neutralising solution is, e.g., a slightly acidic solution with a pH in the range of 4-6.

It will be clear to the skilled person that preferences expressed above for the adsorbent will also apply to the adsorbent as is used in the process. It will also be clear to the skilled person that preferred aspects of this invention can be combined, except where it is clear from the context that this is not the case.

The invention will be elucidated by the following examples, without being limited thereto or thereby.

### Example 1

Sugar beet pulp was used as starting material. The sugar beet pulp was sieved to isolate a fraction with a particle size between 200 and 400 micron. The isolated fraction had a carboxylate content in the region of 200-1000 microequivalent carboxylate per gram, and a pectin content of at least 5 wt.%.

An amount of 333.33 g iron (III) chloride hexahydrate was dissolved in 500 ml water, to obtain a solution of 40 wt.% FeC13. Sugar beet pulp particles were contacted with the solution in an amount of 6 ml solution per gram sugar beet pulp. The samples were shaken briefly and allowed to rest overnight at room temperature.
The samples were dried overnight at 40°C. The dried samples were neutralized using a solution of NH4OH (at 12 wt.% NH3), in an amount of 6.5 times the weight of the original amount of sugar beet pulp. The samples were dried over the weekend.
The resulting product contained 82 wt.% of Fe(III), calculated as metal on the dry weight of the starting sugar beet pulp. In one embodiment, from a 5 gram sugar beet pulp sample, 7 grams of Iron(III)-loaded sugar beet pulp were obtained.
Phosphate adsorption capacity of the samples thus obtained was determined.

The adsorption capacity of Lewatit® FO 36 (Lanxess) was also determined for comparison. Lewatit® FO 36 is a weakly basic macroporous monodisperse polystyrene-based ion exchange resin for the selective adsorption of oxoanions, which is doped with a nano-scaled film of iron oxide covering the inner surfaces of the pores of the polymer bead.

For Lewatit® FO 36 (Lanxess) an adsorption capacity of 41 mg/g was determined. The samples obtained by the process according to the invention showed an adsorption capacity of, respectively of 57 mg PO4/g (for a sample prepared from 5 gram beet pulp) and 61 mg PO4/g (for a sample prepared from 50 gram beet pulp).

## Claims

1. Method for removing phosphate from a phosphate-containing water fraction comprising the steps of contacting a phosphate-containing water fraction with an adsorbent, the adsorbent comprising a complex of Fe(III) and pulped plant material, the pulped plant material having a carboxylate content of at least 200 microequivalent carboxylate per gram, and withdrawing an effluent water fraction from the adsorbent.

2. Method according to claim 1, wherein the phosphate-containing water fraction has a phosphate content of at least 20 ppb, in particular at least 50 ppb, more in particular at least 100 ppm, and/or a phosphate content below 1000 ppb, more specifically below 500 ppb.

3. Method according to any one of the preceding claims, wherein the phosphate containing water fraction is contacted with the adsorbent in a fixed bed, fluidised bed or moving bed, in a column, or in a stirred reactor, preferably a column.

4. Method according to any one of the preceding claims, wherein the phosphate content of the effluent water fraction is less than 50% of the phosphate content of the starting phosphate-containing water fraction, in particular less than 25%, more in particular less than 10%.

5. Method according to any one of the preceding claims, wherein the phosphate content of the effluent water fraction is reduced to a value of less than 100 ppb, in particular less than 50 ppb, more in particular less than 20 ppb, or even less than 10 ppb, in particular less than 10 ppb.

6. Method according to any one of the preceding claims, wherein the effluent water fraction is provided to a reverse osmosis step.

7. Method according to any one of the preceding claims wherein the adsorbent is periodically regenerated by a process comprising the steps of
- stopping the provision of phosphate-containing water fraction to the adsorbent
- contacting the adsorbent with an alkaline aqueous regeneration solution,
- withdrawing the alkaline aqueous regeneration solution from the adsorbent, and
- resuming the provision of phosphate-containing water fraction to the regenerated adsorbent.

8. Method according to claim 7, wherein the alkaline aqueous regeneration solution has a pH of at least 11.5.

9. Method according to claim 7 or 8, wherein between the step of withdrawing the alkaline aqueous regeneration solution from the adsorbent, and the step of resuming the provision of phosphate-containing water fraction to the regenerated adsorbent, the adsorbent is contacted with a neutralizing solution.

10. Adsorbent suitable for use in the process according to any one of the preceding claims, which comprises a complex of Fe(III) and pulped plant material, the pulped plant material having a carboxylate content of at least 200 microequivalent carboxylate per gram.

11. Adsorbent according to claim 10, wherein the pulped plant material is a pectin-containing plant material that is obtained as waste product after withdrawal of food or feed components from fruits and vegetables, more in particular a pulped plant material derived from fruit, e.g., citrus pulp and apple pulp, or a pulped plant material derived from vegetables, e.g., beet pulp, potato pulp, chicory pulp, tomato pulp, and carrot pulp, with beet root pulp being particularly preferred.

12. Adsorbent according to claim 10 or 11, wherein the pulped plant material has a carboxylate content of at least 300 µeq/g, in particular at least 400 µeq/g and/or at most 2000 µeq/g, in particular at most 1000 µeq/g.

13. Adsorbent according to any one of claims 10-12, wherein the complex of Fe(III) and pulped plant material has an Fe(III) content of at least 1 wt.%, expressed as metallic iron, per gram of dry pulped plant material, in particular at least 5 wt.%, more in particular at least 10 wt.%, and/or an Fe(III) content of at most 90 wt.%, expressed as metallic iron, per gram of pulped plant material, in particular at most 60 wt.%, more in particular at most 50 wt.%.

14. Adsorbent according to any one of claims 10-13, wherein the average particle size of the pulped plant material and/or of the adsorbent is within the range of 0.1 mm to 10 mm, in particular at most 8 mm, more in particular at most 5 mm, in some embodiments at most 2 mm, specifically at most 1 mm and/or at least 0.2 mm, in particular at least 0.3 mm, in one embodiment in the range of 0.1 to 2 mm, in particular 0.1-1 mm, more specifically in the range of 0.3-1 mm.

15. Method for manufacturing an adsorbent according to any one of claims 10-14, comprising the steps of
- contacting pulped plant material with an aqueous solution of an Fe(III) salt with a concentration of at least one mole/liter;
- optionally removing superfluous salt solution from the pulped plant material provided with Fe(III) salt;
- subjecting the pulped plant material provided with Fe(III) salt to a drying step;
- contacting the dried pulped plant material provided with Fe(III) with a neutralising solution, and
- optionally subjecting the neutralised pulped plant material provided with Fe(III) salt to a further drying step.
